# EUROPÄISCHE PATENTSCHRIFT

(11) **EP 0 712 081 B1**
(45) Veröffentlichungstag und Bekanntmachung des Hinweises auf die Patenterteilung: **08.04.1998**
(21) Anmeldenummer: 95117012.5
(22) Anmeldetag: 28.10.1995
(51) Int. Cl.: G06F 11/14

(54) **Vorrichtung und Verfahren zur Sicherung von Daten**
Device and method for saving data
Dispositif et procédé pour la sauvegarde de données

(30) Priorität: 11.11.1994 DE 4440251
(43) Veröffentlichungstag der Anmeldung: 15.05.1996
(73) Patentinhaber: MAN Roland Druckmaschinen AG, 63075 Offenbach (DE)
(72) Erfinder: Tenfelde, Johannes, D-63110 Rodgau (DE); Duschl, Dieter, Dr., D-630171 Offenbach (DE); Ruppertz, Michael, D-65812 Bad Soden (DE); Schlitz, Thomas, D-63165 Mühlheim (DE)
(74) Vertreter: Marek, Joachim, Dipl.-Ing.

(56) Entgegenhaltungen:
- EP-A- 0 444 544
- EP-A- 0 572 019

## Beschreibung

Die Erfindung betrifft einen Rechner innerhalb einer Druckmaschine gemäß dem Oberbegriff von Anspruch 1.

Der Druckprozeß wird heute zunehmend von einem Leitstand aus gesteuert und überwacht. Von einem Leitstand aus können somit die verschiedensten Komponenten sowie Stellglieder in ihrem Ist-Zustand überwacht und entsprechend den Prozeßbedürfnissen auch verstellt werden. Über einen Druckmaschinenleitstand erfolgt aber auch die Erfassung, Verwaltung sowie Bearbeitung von Betriebsdaten der Druckaufträge. Als Daten sind beispielsweise Auftragsnummer, Kundenname, Auflagenzahl, Termine, Qualitätsdaten usw. zu nennen. Ein Rechner für eine Druckmaschine, der nach Art eines PC aufgebaut ist, ist durch die DE 4 123 126 C1 bekannt.

Nachteilig bei einem derartigen Rechner ist, daß beim Eingeben von Daten bzw. wenn Daten beispielsweise über ein Diskettenlaufwerk in das RAM oder auf die Festplatte des Rechners überspielt werden, ein plötzlich auftretender Stromausfall den Eingabe- bzw. Kopiervorgang abbricht. Eine unter einem bestimmten Namen eröffnete Datei wird somit nicht ordnungsgemäß geschlossen und ist somit für den Benutzer unbrauchbar. Ferner können solche nicht ordnungsgemäß abgeschlossenen Dateien bei Wiederaufruf im Rechnersystem Störungen verursachen, so daß hochqualifiziertes Servicepersonal zum Einsatz kommen muß, um einen ordnungsgemäßen Zustand wieder herzustellen.

Aufgabe der vorliegenden Erfindung ist es daher, einen Rechner gemäß dem Oberbegriff von Anspruch 1 derartig zu erweitern, so daß den voranstehend beschriebenen Nachteilen abgeholfen werden kann.

Erfindungsgemäß wird diese Aufgabe durch die kennzeichnenden Merkmale von Anspruch 1 gelöst. Weiterbildungen der Erfindung ergeben sich aus den Unteransprüchen.

Gemäß der Erfindung ist vorgesehen, daß dem Netzteil des Rechners eine Einrichtung zugeordnet ist, welche die Eingangsspannung des Netzteiles überwacht und genau dann ein Signal abgibt, wenn die Eingangsspannung abfällt bzw. unter einen vorgeschriebenen Wert absinkt. Ferner ist vorgesehen, daß durch einen im ROM (BIOS) abgelegten Programmteil dieses Signal erfaßt wird und die Daten, welche ein Benutzer über Tastatur und/oder das Diskettenlaufwerk in das RAM oder die Festplatte des Rechners einspielt, nur dann für den Benutzer wieder aufrufbar abgespeichert werden, wenn während des Einschreib- bzw. Einlesevorganges kein Stromausfall festgestellt wurde. Der erfindungsgemäße Programmteil ist vorzugsweise mit den weiteren Programmroutinen des BIOS in einem EPROM abgespeichert. Über diese Programmroutinen erfolgt bekanntlich das Abspeichern sowie Auslesen von Daten einer Festplatte, ausgelöst durch Befehle des Anwendungsprogrammes.

Die erfindungsgemäße Spannungserfassung nebst entsprechender Auswertung kommt dabei nicht nur dann zum Einsatz, wenn eine Datei vollständig neu in den Rechner eingespielt wird, sondern auch dann, wenn beispielsweise eine auf der Festplatte bestehende Datei vom Benutzer aufgerufen und bestimmte Daten überschrieben bzw. geändert werden. Wird dann während des Abspeicherns von Daten auf das Festplattenlaufwerk ein Stromausfall festgestellt, so hat die Bedienperson bei einem Wiederaufruf keine Möglichkeit mehr auf diese nicht mehr ordnungsgemäß geschlossene Datei zuzugreifen.

Erfindungsgemäß wird dies beispielsweise an einem Festplattenlaufwerk dadurch erreicht, daß beim Abspeichern einer Datei auf der Festplatte diese, hervorgerufen durch das spezielle Programmteil im ROM (BIOS), einen zunächst modifizierten Dateinamen bekommt, und dieser modifizierte Dateiname dann in den vorgesehenen Dateinamen umbenannt wird, wenn während des Abspeicherns kein Stromausfall festgestellt wurde. Stellt nun während des Abspeicherns einer Datei die erfindungsgemäß vorgesehene Erfassungseinrichtung für die Eingangsspannung des Netzteiles (Power-Fail-Signal) einen Stromausfall fest, so kann durch den plötzlichen Abbruch des Speichervorgangs die Datei nicht abgeschlossen werden. Der modifizierte Dateiname wird somit nicht in den eigentlichen vom Benutzer vorgesehenen und aufrufbaren Dateinamen umbenannt. Diese unvollständig abgespeicherte Datei bleibt in einem vom Benutzer nicht mehr aufrufbaren Zustand auf dem Speichermedium, z.B. der Festplatte des PC's. Das Abspeichern von Daten/Dateien in einer zunächst für die Bedienperson nicht aufrufbaren Weise (modifizierter Dateiname) kann auch durch bestimmte Programmroutinen des Anwendungsprogrammes bewirkt werden. Das gleiche gilt für das Zurückversetzen der zunächst nicht aufrufbaren Datei in eine vom Benutzer aufrufbare Datei, wenn während des Abspeicherns durch die Programmroutine im BIOS zur Spannungsüberwachung kein Spannungsabfall feststellbar war, was in diesem Fall über eine Abfrage des BIOS durch das Anwendungsprogramm erfolgt.

Die Erfindung kommt ebenfalls bei der Bearbeitung von beispielsweise auf der Festplatte des Rechners bestehenden Dateien zum Einsatz. In diesem Beispiel sei angenommen, daß der Benutzer eine bestimmte Datei unter einem vorgesehenen Namen über die Tastatur von der Festplatte aufruft um Änderungen vorzunehmen. Die erfindungsgemäß vorgesehene Programmroutine im ROM (BIOS) erzeugt nun ein Duplikat der aufgerufenen Datei und stellt dieses Duplikat dem Benutzer zur Eingabe von Änderungen zur Verfügung. Am Bildschirm wird dem Benutzer diese Datei als bearbeitbares Original dargestellt. Nachdem nun der Benutzer seine vorgesehenen Änderungen vorgenommen hat und diese auf der Platte abspeichern will, erfolgt ein Wiederumbenennen dieser Duplikat-Datei in die Original-Datei, wobei die ursprüngliche Original-Datei überschrieben wird.

Hat sich während des Scheibens von Daten, also während des Bearbeitens der aufgerufenen Datei ein Stromausfall ereignet (Power-down), so sind lediglich die Daten in der zuvor erstellten Duplikat-Datei unvollständig. Beim Wiederanlaufen des Rechners steht dem Benutzer nun aber die intakte Original-Datei zur Verfügung, welche den Datenstand vor Spannungsausfall aufweist. Es wird somit vermieden, daB bei dem Wiederanlaufen des Rechners eine unvollständig geschlossene Datei aufgerufen wird und somit Fehler im Rechnersystem auslöst.

Erfindungsgemäß ist vorgesehen, daß die Überwachung der Eingangsspannung des Netzteil des oder der Rechner erfolgt. Dies hat den Vorteil, daß durch die Trägheit des Netzteiles an der Ausgangsseite des Netzteil noch für eine bestimmte Zeitspanne Spannung anliegt, so daß bestimmte Sicherungsvorgänge noch ausgelöst werden können. Als Beispiel wäre hier das Abheben bzw. in eine bestimmte Position bringen des Lesekopfes der Festplatte des Rechners zu nennen.

Weist die Druckmaschine mehrere Rechner mit entsprechend vielen Netzteilen auf, so kann vorgesehen sein, die Eingangsspannungsüberwachung an einem Netzteil vorzusehen und das entsprechende Signal den übrigen Rechnern zur Verfügung zu stellen.

## Patentansprüche

1. Rechner für eine Druckmaschine, insbesondere für den Leitstand einer Druckmaschine, der einen wiederbeschreibbaren, nicht flüchtigen Speicher aufweist, insbesondere in Form einer Festplatte, und bei dem das Abspeichern sowie Auslesen von Daten des wiederbeschreibbaren, nichtflüchtigen Speichers durch im ROM (BIOS) des Rechners abgelegte Programmteile erfolgt und der Rechner ferner ein Netzteil zur Stromversorgung aufweist,
**dadurch gekennzeichnet,**
daß der Rechner eine Einrichtung zur Überwachung der Eingangsspannung des Netzteiles aufweist, welcher bei einem Spannungsabfall ein Signal entnehmbar ist,
daß im ROM (BIOS) des Rechners ein Programmteil abgelegt ist, durch welches ein bei Spannungsabfall erzeugtes Signal erfaßbar ist,
daß eingegebene Daten zunächst in einem für eine Bedienperson nicht aufrufbaren Zustand im nichtflüchtigen, wiederbeschreibbaren Speicher abgespeichert werden, und
daß nach Beendigung des Abspeichervorganges, wenn durch das Programmteil im ROM (BIOS) kein Spannungsabfall festgestellt wurde, die abgespeicherten Daten in einen für eine Bedienperson aufrufbaren Zustand versetzt werden.

2. Rechner nach Anspruch 1,
**dadurch gekennzeichnet**,
daß durch ein im ROM des Rechners abgelegtes Programmteil bei Aufruf einer Datei zwecks Bearbeitung zunächst eine Duplikat-Datei erzeugt wird und daß diese Duplikat-Datei nach Beendigung der Bearbeitung in die Original-Datei umbenannt wird, wobei die ursprüngliche Datei gelöscht bzw. überschrieben wird.

3. Rechner nach Anspruch 1,
**dadurch gekennzeichnet**,
daß durch ein im Anwendungsprogramm abgelegtes Programmteil bei Aufruf einer Datei zwecks Bearbeitung zunächst eine Duplikat-Datei erzeugt wird und daB diese Duplikat-Datei nach Beendigung der Bearbeitung in die Original-Datei umbenannt wird, wobei die ursprüngliche Datei gelöscht bzw. überschrieben wird.

## Claims

1. Computer for a printing press, particularly for the control desk of a printing press, which has a re-writable non-volatile memory, particularly in the form of a hard disc, and in which the storage and read-out of data of the re-writable non-volatile store takes place by programme parts stored in ROM (BIOS) of the computer and furthermore the computer has a mains portion for current supply,
characterised in that the computer has a device for monitoring the input voltage of the mains part from which a signal is extractable on a voltage drop off,
that a programme portion is stored in ROM (BIOS) of the computer by means of which a signal generated on voltage drop can be detected,
that input data are first stored in the non-volatile re-writable memory in a condition not retrievable by an operative, and
that after the termination of the storage process, if no voltage drop has been detected by the programme part in the ROM (BIOS), the stored data are converted into a condition which can be called up by an operative.

2. Computer according to Claim 1, characterised in that by means of a programme portion stored in the ROM of the computer on calling up a data file for the purpose of editing, a duplicate data file is first generated and that this duplicate data file, after ending the editing, is re-named into the original data file whereby the original data file is extinguished or overwritten.

3. Computer according to Claim 1, characterised in that by means of a programme portion stored in the application programme on calling up a data file for the purpose of editing, first a duplicate data file is generated and that this duplicate data file, after ending of the editing, is re-named into the original data file, wherein the original data file is extinguished or overwritten.

## Revendications

1. Ordinateur pour une machine d'impression, notamment pour le poste de commande d'une machine d'impression, qui comporte une mémoire non volatile pouvant être réécrite, notamment sous forme de disque dur, et dans lequel la mémorisation et la lecture de données de la mémoire non volatile pouvant être réécrite s'effectuent au moyen de programmes mémorisés dans la mémoire morte (BIOS) de l'ordinateur et l'ordinateur comporte en plus un bloc d'alimentation pour l'alimentation en courant,
caractérisé en ce que
l'ordinateur comporte un dispositif qui est destiné à la surveillance de la tension d'entrée du bloc d'alimentation et qui peut fournir un signal lors d'une chute de tension,
un programme est mémorisé dans la mémoire morte (BIOS) de l'ordinateur, programme qui permet de détecter un signal produit lors d'une chute de tension,
des données entrées sont d'abord mémorisées dans un état ne pouvant pas être appelé par un utilisateur dans la mémoire non volatile pouvant être réécrite, et en ce que,
après la fin de l'opération de mémorisation, si aucune chute de tension n'a été constatée par le programme existant dans la mémoire morte (BIOS), les données mémorisées sont remises dans un état pouvant être appelé par un utilisateur.

2. Ordinateur selon la revendication 1,
caractérisé par en ce que,
grâce à un programme mémorisé dans la mémoire morte de l'ordinateur, lors de l'appel d'un fichier en vue d'un traitement, une copie de fichier est d'abord produite et cette copie de fichier est ensuite renommée après la fin du traitement pour donner le fichier original, le fichier initial étant effacé ou réécrit.

3. Ordinateur selon la revendication 1,
caractérisé en ce que,
grâce à un programme mémorisé dans le programme utilisateur, lors de l'appel d'un fichier en vue d'un traitement, une copie de fichier est d'abord produite et cette copie de fichier est ensuite renommée après la fin du traitement pour donner le fichier original, le fichier initial étant effacé ou réécrit.
